# EUROPEAN PATENT APPLICATION

(11) **EP 2 124 175 A2**
(43) Date of publication of application: **25.11.2009**
(21) Application number: 09157970.6
(22) Date of filing: 15.04.2009
(51) Int. Cl.: G06Q 10/00

(54) **Acknowledgement delivery system**

(30) Priority: 15.04.2008 AU 2008201669
(71) Applicant: Encore Business Integrated Solutions Pty Limited, Tuggerah, New South Wales 2259 (AU)
(72) Inventor: Rigney, Shane, Tuggerah, New South Wales 2259 (AU); Zivic, Dusan, Tuggerah, New South Wales 2259 (AU)
(74) Representative: Chaillot, Geneviève

(57) **Abstract**

An acknowledgement delivery system and method associated with at least one transaction between a transaction initiating party and a transaction fulfilling party; said transaction given effect by said transaction fulfilling party; said transaction initiated by a transaction instigation event; said transaction being completed by a transaction fulfilment event; each transaction defined by a unique transaction identifier; said system transmitting events associated with said transaction fulfilment event to said transaction initiating party by way of preset data sequences defined with reference to said unique transaction identifier.

## Description

The present invention relates to an acknowledgement delivery system, and, more particularly, although not exclusively, to such a system implemented by means of electronic messaging.

### BACKGROUND

In the context of, for example, delivery of goods the scenario can often arise where a party would like to know the status of the delivery. The scenario can extend to the situation where it can be particularly helpful if the originator of the delivery could be contacted and informed that the delivery has been made. In particular context it is desirable if this data sequence is provided at or very soon after the actual time of delivery. In some situations it may be helpful if other information could be provided including, for example, a data sequence indicating that the delivery has been delayed or has not been successful.

It is a further technical problem to provide this data sequence from out in the field where communication bandwidth may be quite low or even if not quite low relatively expensive per unit of bandwidth.

It is a further technical problem that the operator out in the field is not set up to provide complex detailed data input whilst, on the other hand, the originator of the delivery desires complex details.

Whilst a messaging system in this form may be desirable, in many delivery scenarios, it is simply not convenient or cost effective for the parties involved in the delivery to provide such information either at all or in a timely manner.

It is an object of the present invention to address the above disadvantages, or at least provide a useful alternative.

### Notes

1. The term "comprising" (and grammatical variations thereof) is used in this specification in the inclusive sense of "having" or "including", and not in the exclusive sense of "consisting only of".
2. The above discussion of the prior art in the Background of the invention, is not an admission that any information discussed therein is citable prior art or part of the common general knowledge of persons skilled in the art in any country.

### BRIEF DESCRIPTION OF INVENTION

Accordingly, in one broad form of the invention there is provided an acknowledgement delivery system associated with at least one transaction between a transaction initiating party and a transaction fulfilling party; said transaction given effect by said transaction fulfilling party; said transaction initiated by a transaction instigation event; said transaction being completed by a transaction fulfilment event; each transaction defined by a unique transaction identifier; said system transmitting events associated with said transaction fulfilment event to said transaction initiating party by way of preset data sequences defined with reference to said unique transaction identifier.

Accordingly, in a further broad form of the invention there is provided a method of acknowledging transaction fulfilment events to a transaction initiating party associated with at least one transaction between said transaction initiating party and a transaction fulfilling party; said transaction given effect by said transaction fulfilling party; said method comprising the steps of: said transaction initiated by a transaction instigation event; said transaction being completed by a transaction fulfilment event; each transaction defined by a unique transaction identifier; said system transmitting events associated with said transaction fulfilment event to said transaction initiating party by way of preset data sequences defined with reference to said unique transaction identifier.

In a further broad form of the invention there is provided a translate and relay mechanism wherein a preset data sequence transmitted over a communication network 26 is mapped to a corresponding first mapped data sequence by said translate and relay mechanism and then transmitted over communications network 33 to a transaction initiating party; said translate and relay mechanism acknowledging transaction fulfilment events to a transaction initiating party associated with at least one transaction between said transaction initiating party and a transaction fulfilling party; said transaction given effect by said transaction fulfilling party; said transaction initiated by a transaction instigation event; said transaction being completed by a transaction fulfilment event; each transaction defined by a unique transaction identifier; events associated with said transaction fulfilment event transmitted to said transaction initiating party by way of a preset data sequence defined with reference to said unique transaction identifier.

Preferably said preset data sequence is selected from a list of two or more graded data sequences.

Preferably at the time of fulfilment (delivery) the transaction fulfilment event 20 includes the imaging of goods 15 together with imaging of the transaction target party 14 as a form of verification taken by an imaging device 52 thereby producing an image 51 forming supplementary data 50 which is transmitted over communication network 26 to said translate and relay mechanism 28 for on transmission to the transaction fulfilment party 13 and/or the transaction initiating party 12 over communications network 33.

Preferably said preset data sequence is transmitted automatically.

Preferably said preset data sequence is transmitted in real time.

Preferably said preset data sequences are selected from a list of two or more graded data sequences.

The system of any previous claim wherein set preset data sequence is transmitted to a translate and relay mechanism when initiated.

Preferably said preset data sequence is transmitted as part of set transaction fulfilment event.

Preferably said preset data sequence is mapped to a corresponding first mapped data sequence by said translate and relay mechanism and then transmitted to said transaction initiating party.

Preferably said first mapped data sequence is pushed from said translate and relay mechanism to a receiving device of said transaction initiating party.

Preferably said translate and relay mechanism interrogates said transaction intermediary periodically.

Preferably said translate and relay mechanism pulls a data sequence from said transaction intermediary pursuant to said step of interrogation.

Preferably said transaction fulfilment party engages a transaction intermediary to give effect to said transaction.

Preferably said transaction comprises at least a first transaction component and a second transaction component.

Preferably said transaction fulfilling party gives effect to said first transaction component.

Preferably said transaction intermediary gives effect to said second transaction component.

Preferably said the first transaction component comprises supply of a good or service.

Preferably said second transaction component comprises delivery of said good or service.

Preferably said transaction initiating party instigates said transaction instigation event.

Preferably said transaction instigation event comprises the ordering of a good or service.

Preferably on the occurrence of said transaction fulfilment event a first preset data sequence is caused to be sent to said transaction initiating party.

Preferably said preset data sequence is sent to a translate and relay mechanism.

Preferably translate and relay mechanism maps said first preset data sequence to a corresponding first mapped data sequence.

Preferably said translate and relay mechanism causes said corresponding first mapped data sequence to be transmitted to said transaction initiating party.

Preferably each one of said preset data sequences comprises a data sequence portion.

Preferably said preset data sequences further said a unique transaction identifier or an analog thereof.

Preferably said unique transaction identifier or analog thereof comprises a telephone number unique to said transaction.

Preferably said corresponding mapped data sequence includes an alphanumeric sequence.

Preferably said corresponding mapped data sequence further includes said unique transaction identifier or an analog thereof.

Preferably said corresponding mapped data sequence includes identity data corresponding to said transaction initiating party.

Preferably said identity data includes a communication address of said transaction initiating party.

Preferably said communication address comprises a telephone number.

Preferably said preset data sequences comprise SMS data sequences.

Preferably said preset data sequences comprises email data sequences.

Preferably said data sequences comprise voice mail data sequences.

In yet a further broad form of the invention there is provided in combination a mobile communications device and a barcode reader; said mobile communications device on receipt of a barcode data signal from said barcode reader initiating a data transmission to a remote location; said data transmission including data corresponding to barcode data read by said barcode reader.

Preferably said communications device initiates said data transmission automatically on receipt of said barcode data signal.

Preferably said data transmission is directed to a specified remote location.

Preferably said specified remote location is designated in said barcode data signal.

Preferably said mobile communications device and said barcode reader are integrated into a single hand held device.

Preferably said single hand held device including the scanner portion of said barcode reader is encased in a single casing.

### BRIEF DESCRIPTION OF DRAWINGS

Embodiments of the present invention will now be described with reference to the accompanying drawings wherein:
Figure 1 is a block diagram of an acknowledgement delivery system in accordance with a first preferred embodiment of the invention,
Figure 2 illustrates a messaging display for use with the embodiment of figure 1,
Figure 3 is a block diagram of logic modules suitable to implement the system of figure 1,
Figure 4 is a screen shot of a user login page as suitable for use with the system of figure 1,
Figure 5 is a screen shot of a customer details page suitable for use with the system of figure 1,
Figure 6 is a screen shot of a delivery details page suitable for use with the system of figure 1,
Figure 7 is a screen shot of a delivery details page showing an address error suitable for use with the system of figure 1,
Figure 8 is a screen shot showing order details entry suitable for the use with the system of figure 1,
Figure 9 is a screen shot of an order completion screen suitable for use with the system of figure 1,
Figure 10 is a screen shot of a delivery slip record suitable for use with the system of figure 1,
Figure 11 is a screen shot of an order history list suitable for use with the system of figure 1,
Figure 12 is a screen shot of a measurements and statistics page suitable for use with the system of figure 1,
Figure 13 is a screen shot of a tracking map suitable for use with the system of figure 1,
Figure 14 is a screen shot showing profile details of a particular end customer in accordance with the system of figure 1,
Figure 15 is a screen shot of a users detail screen suitable for use with the system of figure 1,
Figure 16 is a data sequence customise screen suitable for use with the system of figure 1,
Figure 17 is a screen shot of a client relationship management contact screen suitable for use with the system of figure 1,
Figure 18 is a screen shot of a campaign listing screen suitable for use with the system of figure 1,
Figure 19 is a screen shot of a campaign data sequence screen suitable for use with the system of figure 1,
Figure 20 is a screen shot of an SMS data sequence indicating successful delivery displayed on a customer mobile phone suitable for use with the system of figure 1,

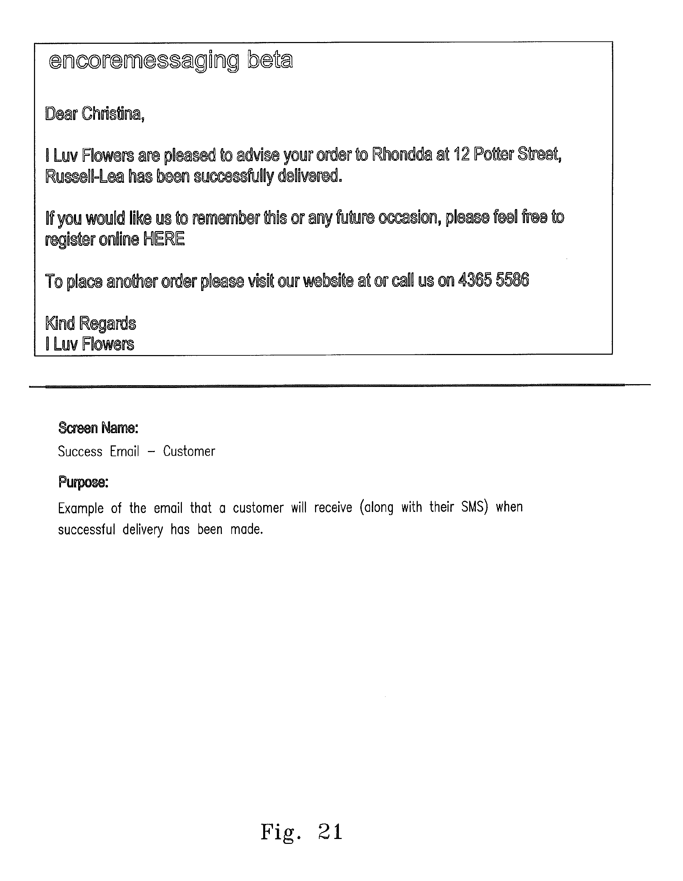

Figure 21 is a screen shot of a data sequence screen for a data sequence indicating success suitable for use with the system of figure 1,
Figure 22 comprises screen shots of a success data sequence for the client and an unsuccessful data sequence/error data sequence for the client suitable for use with the system of figure 1,
Figure 23 is a block diagram of an acknowledgement delivery system in accordance with a second preferred embodiment of the present invention.
Figure 24 is a block diagram of an acknowledgement delivery system in accordance with a third preferred embodiment of the present invention.
Figure 25 is a block diagram of a hardware implementation of the system of figure 1.
Figure 26 illustrates an alternative messaging display incorporating barcodes corresponding to predetermined data sequences.
Figure 27 illustrates a barcode based delivery slip for use by a transaction intermediary in accordance with a preferred embodiment.
Figure 28 tabulates associated services in accordance with a further preferred embodiment.

### DETAILED DESCRIPTION OF PREFERRED EMBODIMENTS

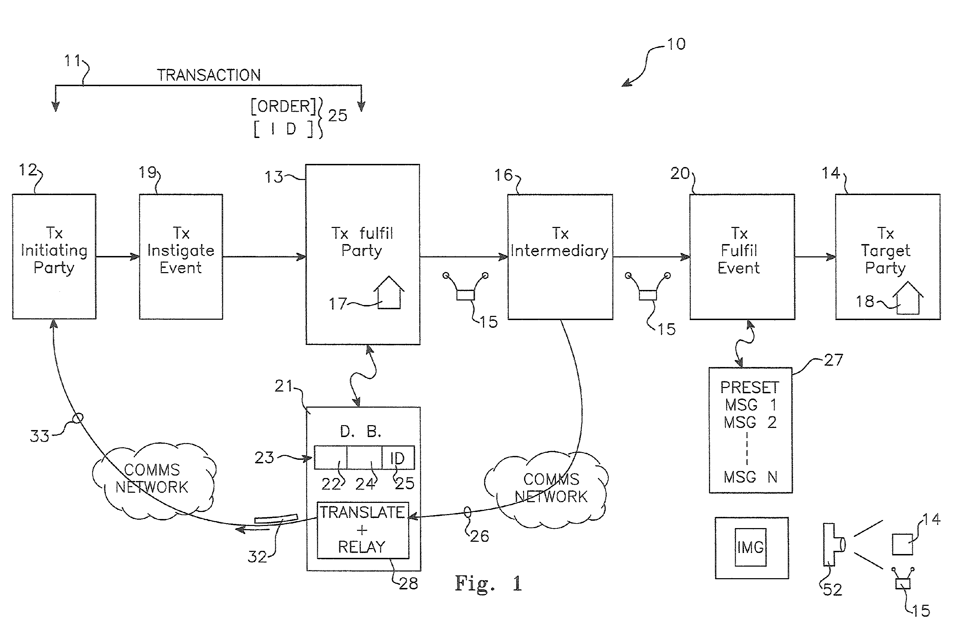

With reference to Figure 1 there is illustrated a block diagram of an acknowledgement delivery system 10 in accordance with a first preferred embodiment of the present invention.

With reference to Figure 1 the system is described in the context of delivery of goods in the form of flowers however other goods and, indeed, other forms of deliverable (including services) are contemplated as will be described with reference to further embodiments later in the specification.

A transaction 11 is initiated as a result of commercial agreement between a transaction initiating party 12 and a transaction fulfilling party 13. In this instance the transaction 11 is the supply of goods 15 (more particularly flowers in this instance) from transaction fulfilling party 13 to a transaction target party 14. The transaction fulfilling party 13 may engage at least a first transaction intermediary 16. In this instance the first transaction intermediary 16 is a courier who is contracted by the transaction fulfilling party 13 to deliver the goods from the transaction fulfilling party's premises 17 to the transaction target party's premises 18.

In this instance there is a transaction instigation event 19 comprising the placement of an order by the transaction initiating party 12 with the transaction fulfilling party 13 for the delivery of goods 15 to the transaction target party 14. In this instance there is also a transaction fulfilment event 20 comprising, in this instance, the delivery on time of the goods 15 as contracted between the transaction initiating party 12 and transaction fulfilling party 13.

In use of the system 10 a transaction initiating party 12 may initiate transaction 11 by telephoning the transaction fulfilling party 13 (in this instance a flower shop) and requesting a delivery of goods in the form of flowers 15 to a transaction target party 14 in the form of a friend. The flower shop as transaction fulfilling party 13 may log the order on a database 21. During this transaction instigation event 19 telecommunication address data 22 will also be obtained in this instance in the form of a mobile telephone number upon which the transaction initiating party 12 can receive data sequences either from or instigated by the transaction fulfilling party 13. The telecommunication address data 22 will be linked in a data record 23 in database 21 with identity data 24 identifying the transaction initiating party 12. The database will also store a unique transaction identifier 25 which identifies the specific transaction 11 entered into by way of transaction instigation event 19. This unique transaction identifier 25 is assigned uniquely to the transaction 11 comprising the agreement to deliver flowers to the transaction target party 14.

In a particular preferred form supplementary data 50 in the form of image data 51 may be transmitted in addition to the preset data sequence 27. The supplementary data 50 may be encapsulated with the preset data sequence 27 or may be transmitted as a separate data transmission over communications network 26. In this instance the supplementary data comprises an image 51 taken by imaging device 52 which shows both the goods 15 and the transaction target party 14 together in the one image.

In this instance the image 51 within supplementary data 50 is transmitted as a form of verification to both the transaction fulfilment party 13 and the transaction initiating party 12. The transmission may form part of the transaction fulfilment event 20 or, in the alternative, may be set up as an independent supplementary event.

### In Use

As generally defined above, a transaction 11 is initiated having a unique transaction identifier 35 and being linked in database 21 via data record 23 with certain other data including identity data 24 matching the identity of the transaction initiating party 12 and including at least telecommunication address data 22, suitable to allow telecommunication contact to be made with the transaction initiating party 12 for the purposes of communications of information concerning the transaction fulfilment event 20 and, potentially, for the purposes of initiation of subsequent communications as will be described further in this specification.

In this instance the goods, 15 comprising flowers are prepared by the transaction fulfilment party 17. A transaction intermediary 16 in this instance in the form of a courier is then engaged by the transaction fulfilment party to deliver the goods 15 to the transmission target party 18. The transaction intermediary 16 will be provided with a channel 36 for the purpose of communicating a preset data sequence 27 to a translate-and-relay mechanism 28. In many instances the translate-and-relay mechanism 28 will be directly associated with database 21 and often at the same location in order to facilitate data interchange between database 21 and the translate-and-relay mechanism 28.

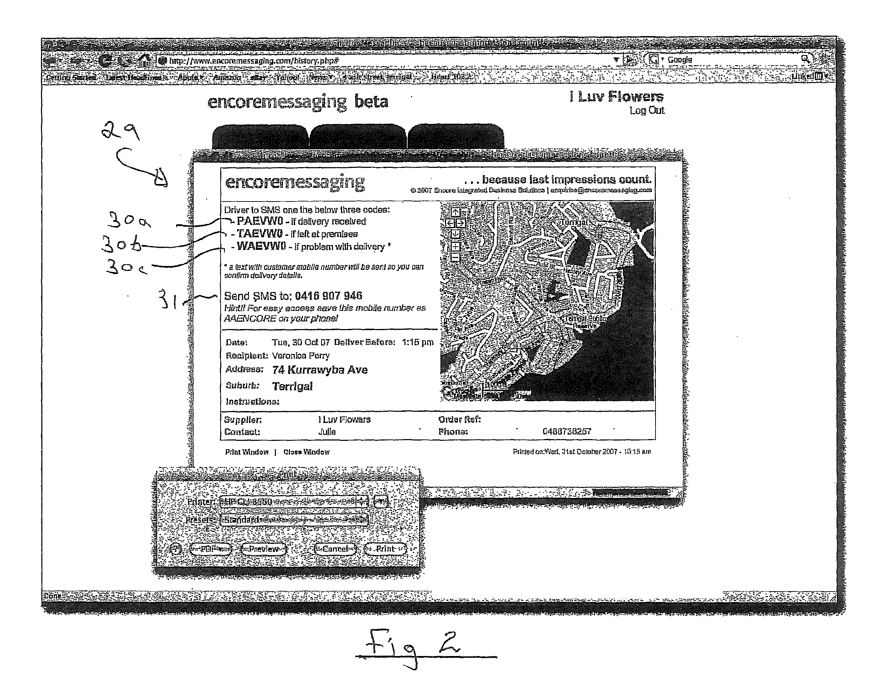

In this instance the preset data sequence, as illustrated via the messaging display 29 illustrated in Figure 2 comprises one of three alpha-numeric character sequences 30a, b, c. More particularly, in this instance, one of the three alpha-numeric character sequences 30 a,b,c transmitted by an SMS channel (for example, instigated on a mobile phone) to a translate-and-relay mechanism contact telephone number 31. More specifically, in this instance the courier enters the alpha-numeric code PAEVWO at the time of a transaction fulfilment event 20 if the delivery is made successfully to the intended recipient on time. Alternatively, the courier enters the alpha-numeric code TAEVWO if the goods 15 are left at the premises but no direct contact is made with the intended recipient (the transaction target party 14). Finally, if there is a problem with the delivery, in terms of otherwise being able to properly complete the transaction fulfilment event 20, then the courier can SMS the alpha-numeric code WAEVWO. In this instance, any one of the three codes is sent via SMS to a mobile telephone number 0416907946. This causes the code 30 to be transmitted as an SMS data sequence over channel 26 to translate-and-relay mechanism 28 where the alpha-numeric sequence 30a, b, c is mapped against the unique transaction identifier 25 and then mapped to a corresponding mapped data sequence 32 for delivery over second channel 33 to transaction initiating party 12. The mapped data sequences can take the form as shown in data sequence customised screen 34 of 616 where in the alpha-numeric character sequences 30 map to respective corresponding mapped data sequences 32 A, B, as will be more fully described below.

The above described acknowledgement delivery system 10 described with reference to a particular delivery example relating to particular goods (flowers)can form the basis for a sophisticated acknowledgement delivery system which includes the ability to capitalise on the contents of the database 21 created.

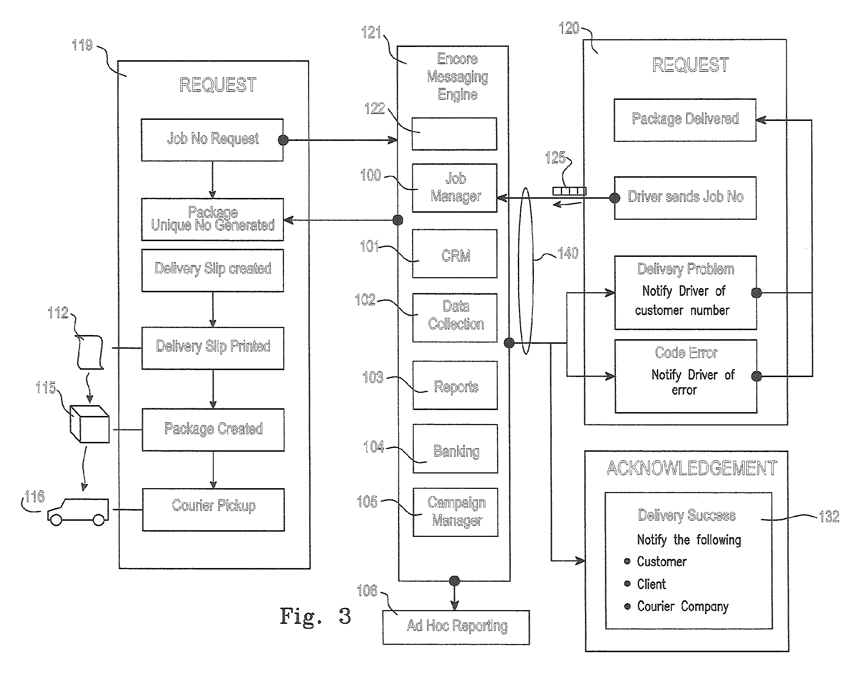

With reference to fig 3 there is illustrated a block diagram of the system of figure 1 incorporating a messaging engine including a client relationship management module and a "campaign manager" which provides one form for capitalising on the contents of database 21. Like components in fig 3 are numbered as for the system of figure 1 except in the 100 series. So, for example, the transaction instigation event 19 of figure 1 corresponds to the "request" module 119 of fig 3. The transaction fulfilment event 20 of figure 1 corresponds to the fulfilment module 120 of fig 3.

The database 21 of fig 1 corresponds broadly with the "encore messaging engine" 121 of fig 3. In this instance the database 21 is enhanced by including job manager 100, customer relationship management (CRM) module 101, data collection module 102, reports module 103, banking module 104 and campaign manager 105. The database 121 also includes an ad hoc reporting module 106. These modules allow for a transaction fulfilment party 13 to create a database of entries comprising data records 123 which can then be provided to campaign manager 105 for subsequent marketing campaigns as will be further described with reference to an example in this specification.

In the event that a transaction initiating party 12 initiates a transaction instigate event 119 the transaction fulfilment party 13 will cause a job number request 111 to be generated and fed to database 123. Job manager 100 will then generate a unique transaction identifier 125 resulting in the creation and printing of a delivery slip 112 for application to goods 115 for subsequent pick up by the transaction intermediary 116 comprising, in the first instance a courier for delivery of the package 115 to a transaction target party 14. The delivery of the package comprises of the transaction fulfilment event 120 at which time the transaction intermediary 116 will transmit the transaction identifier 125 by way of an sms data sequence to database 121 within the messaging engine.

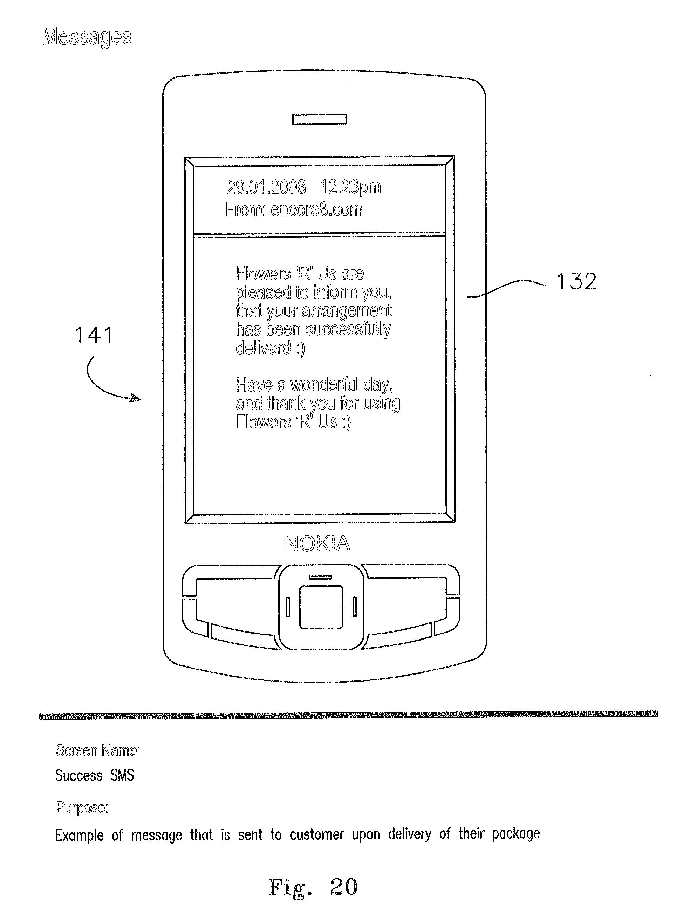

In this instance two way communication is possible as between the database 121 and the transaction intermediary 116 such that if the transaction fulfilment party 13 becomes aware of problems or other events which you would be of assistance for the transaction intermediary 116 to be aware of. That is, in this instance, there is a bidirectional channel 140 available. In its simplest form this can be implemented by way of a mobile telephone communication link with the use of sms messaging backwards and forwards on the link. In a preferred form the transaction intermediary 116, in addition to the unique transaction identifier 125 will also send one of a series of preset data sequences as described with reference to fig 1. These preset data sequences are then mapped onto a corresponding mapped data sequence 132 whereby the customer or transaction initiating party 12 is notified of the status of the delivery. The mapped data sequence 132 may appear on the mobile phone screen 141 of a mobile phone of the customer or transaction initiating party 12 as illustrated in fig 20.

At the time of fulfilment (delivery) the transaction fulfilment event 20 may include the imaging of the goods 15 together with the transaction target party 14 as a form of verification taken by an imaging device 52 thereby producing an image 51 forming supplementary data 50 which is transmitted over communication network 26 to the translate and relay mechanism 28 for on transmission to the transaction fulfilment party 13 and/or the transaction initiating party 12 over communications network 33.

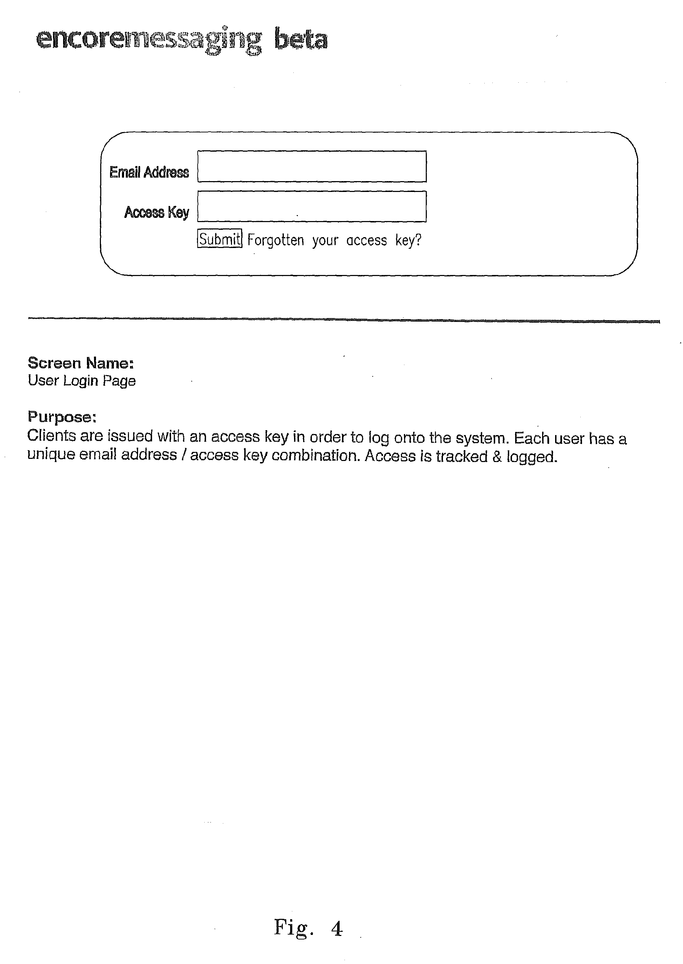

Figure 4 is a screen shot of a user login page as suitable for use with the system of figure 1.

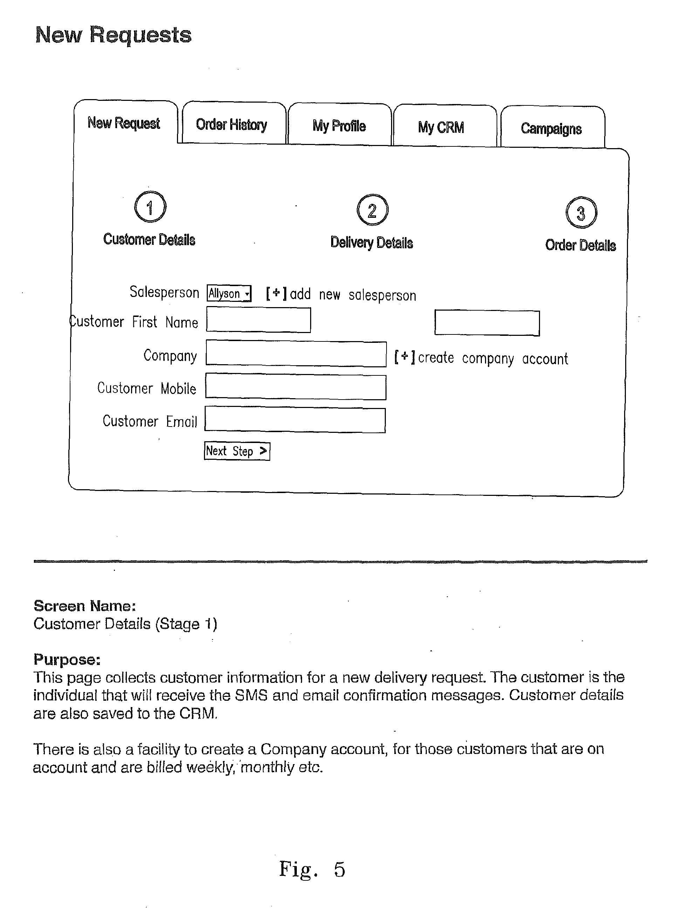

Figure 5 is a screen shot of a customer details page suitable for use with the system of figure 1.

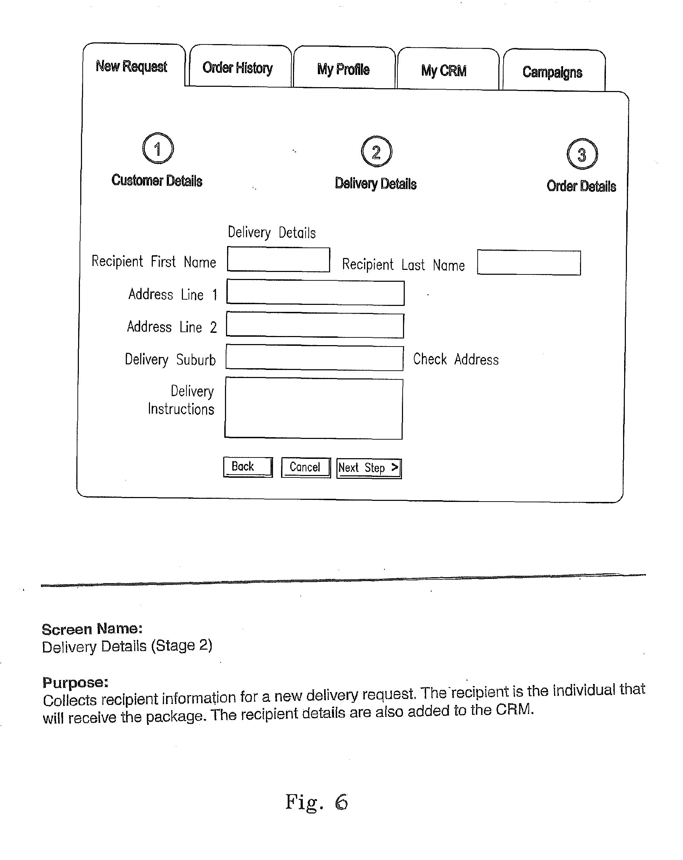

Figure 6 is a screen shot of a delivery details page suitable for use with the system of figure 1.

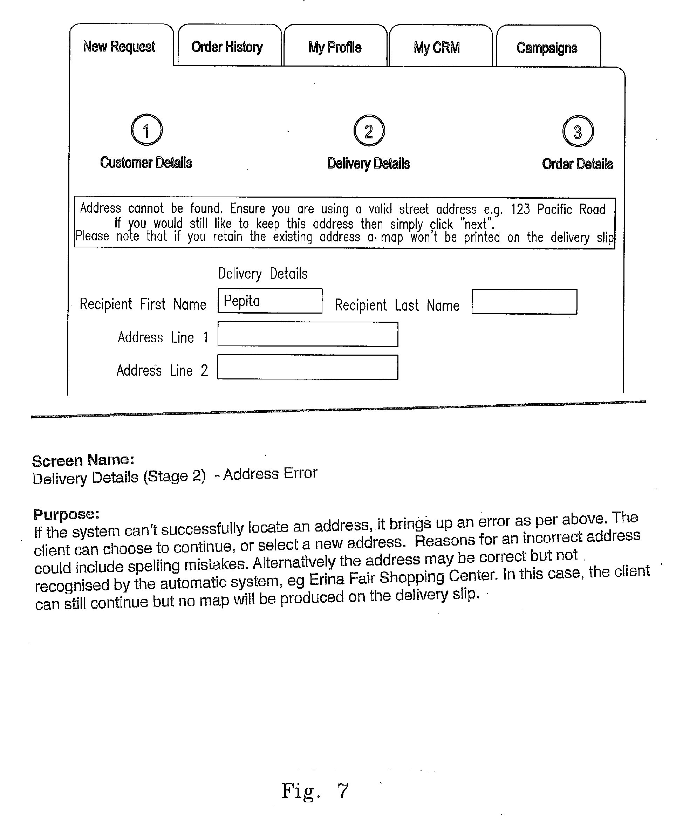

Figure 7 is a screen shot of a delivery details page showing an address error suitable for use with the system of figure 1.

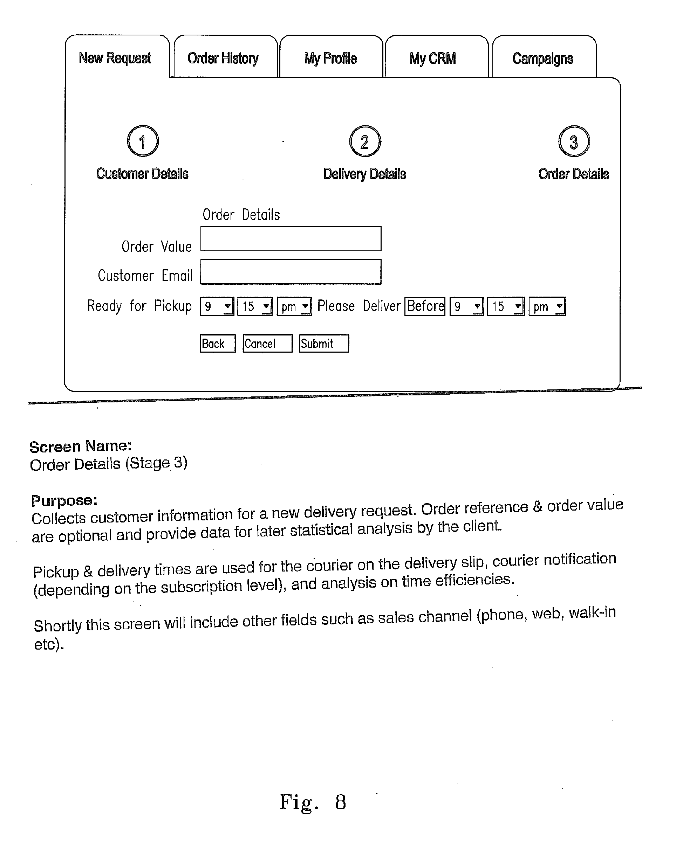

Figure 8 is a screen shot showing order details entry suitable for the use with the system of figure 1.

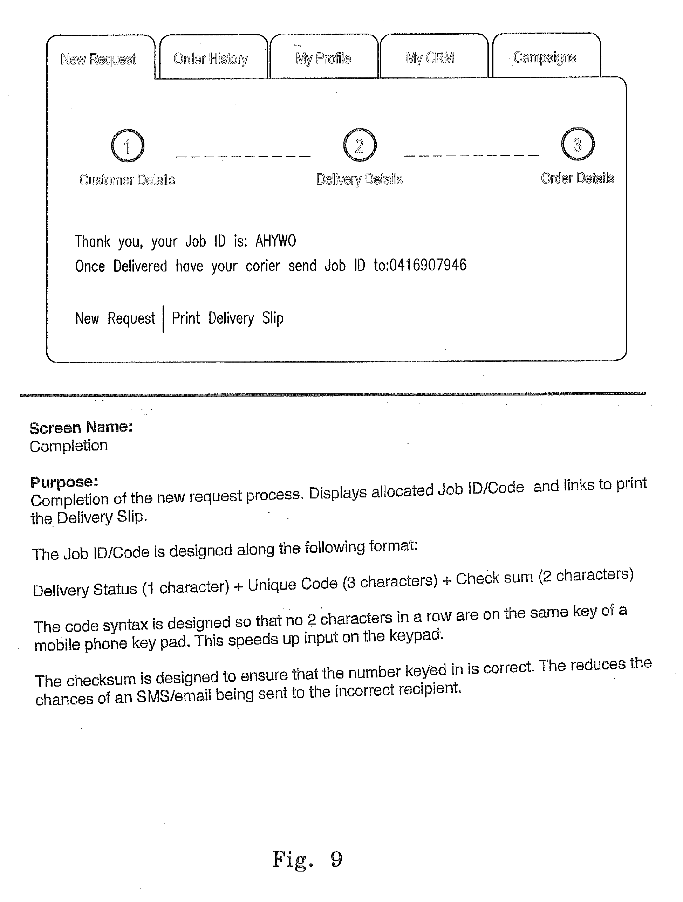

Figure 9 is a screen shot of an order completion screen suitable for use with the system of figure 1.

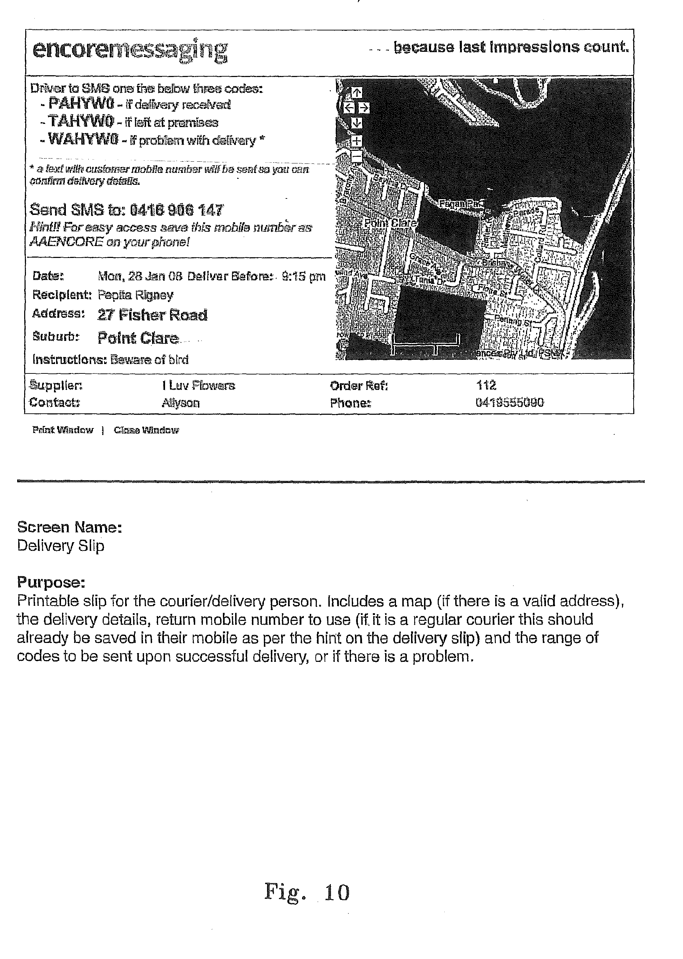

Figure 10 is a screen shot of a delivery slip record suitable for use with the system of figure 1.

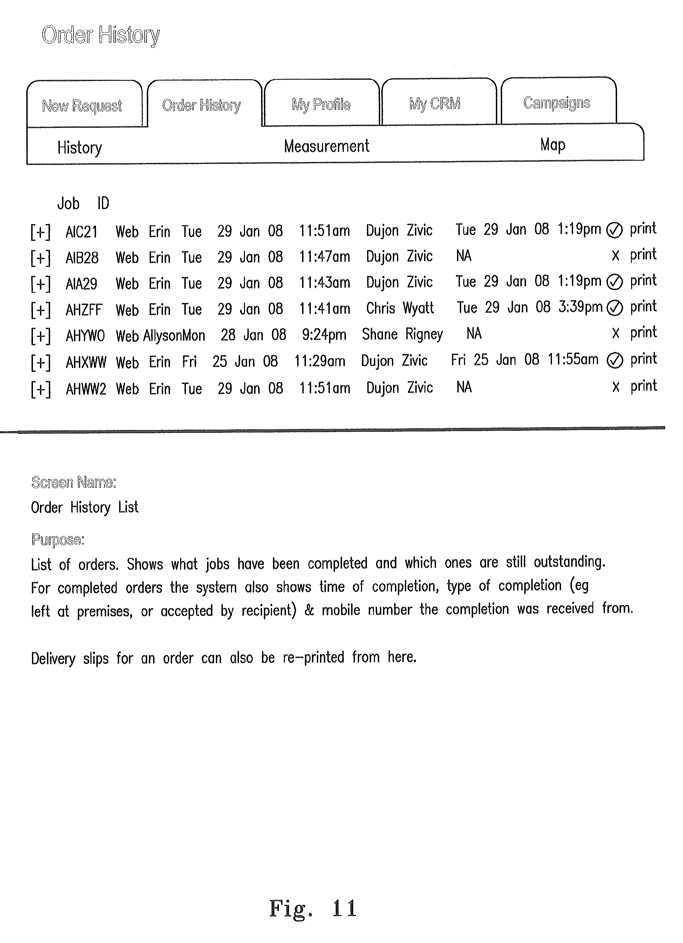

Figure 11 is a screen shot of an order history list suitable for use with the system of figure 1.

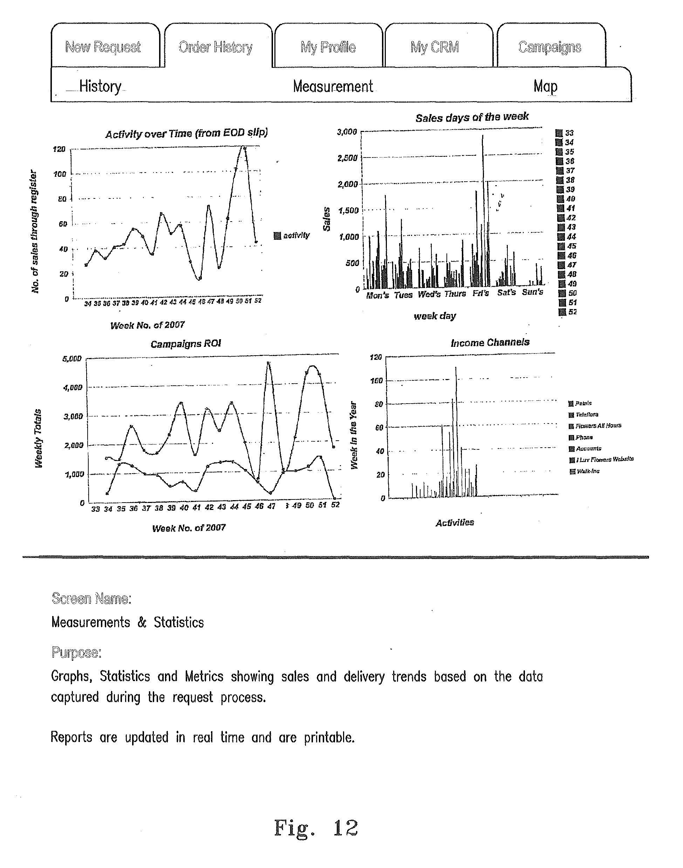

Figure 12 is a screen shot of a measurements and statistics page suitable for use with the system of figure 1.

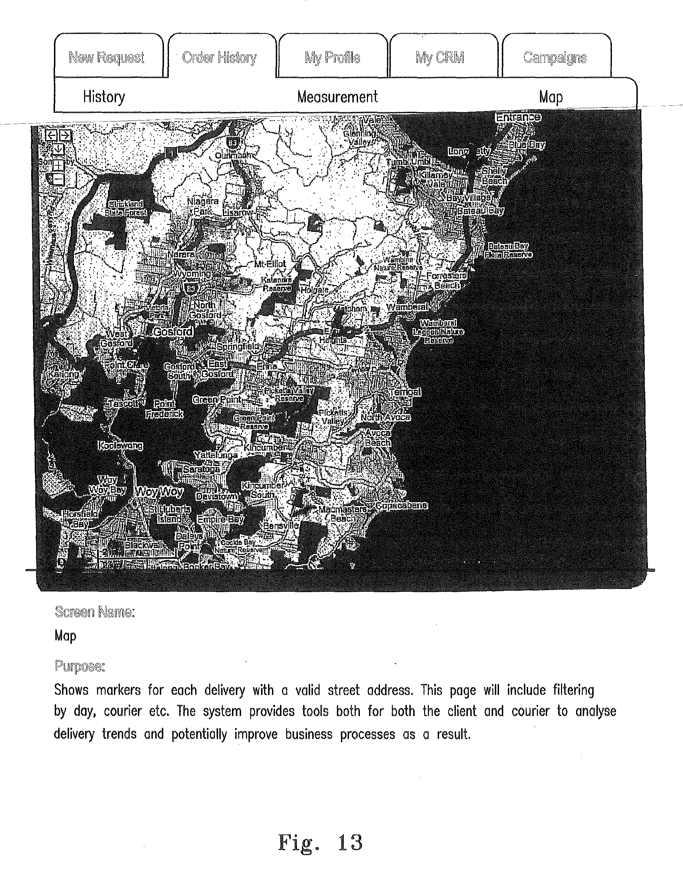

Figure 13 is a screen shot of a tracking map suitable for use with the system of figure 1.

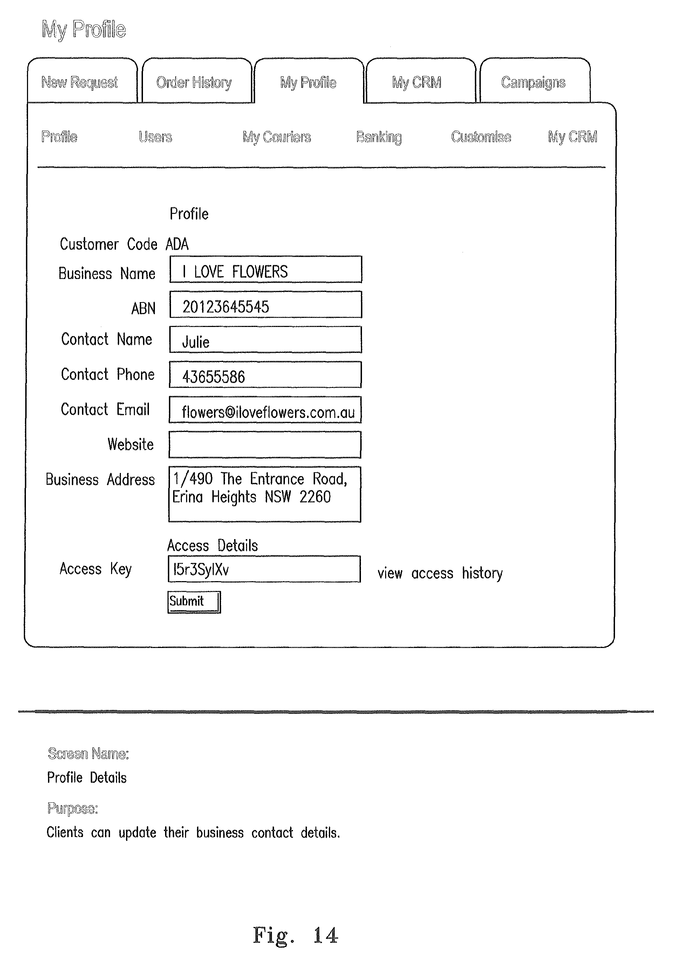

Figure 14 is a screen shot showing profile details of a particular end customer in accordance with the system of figure 1.

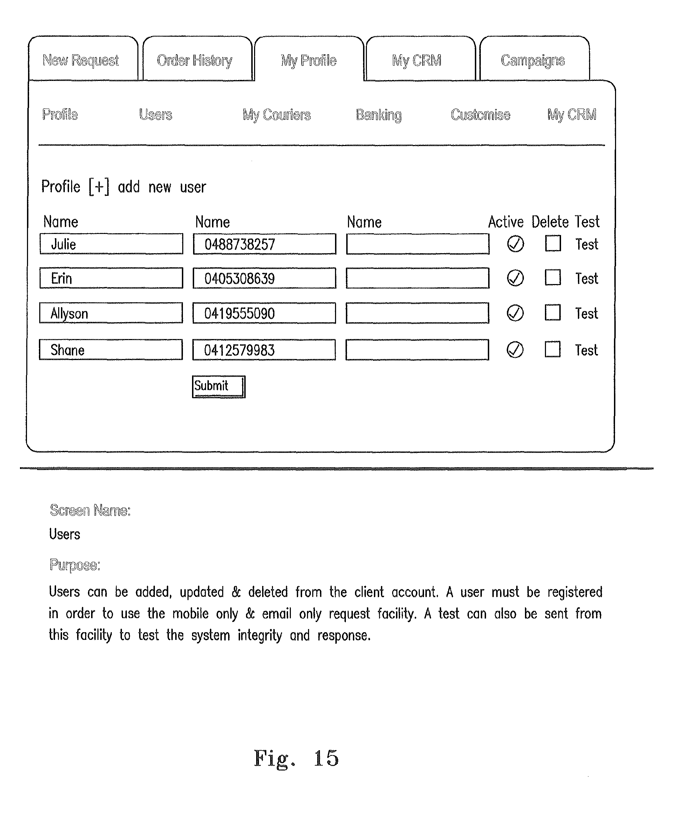

Figure 15 is a screen shot of a users detail screen suitable for use with the system of figure 1.

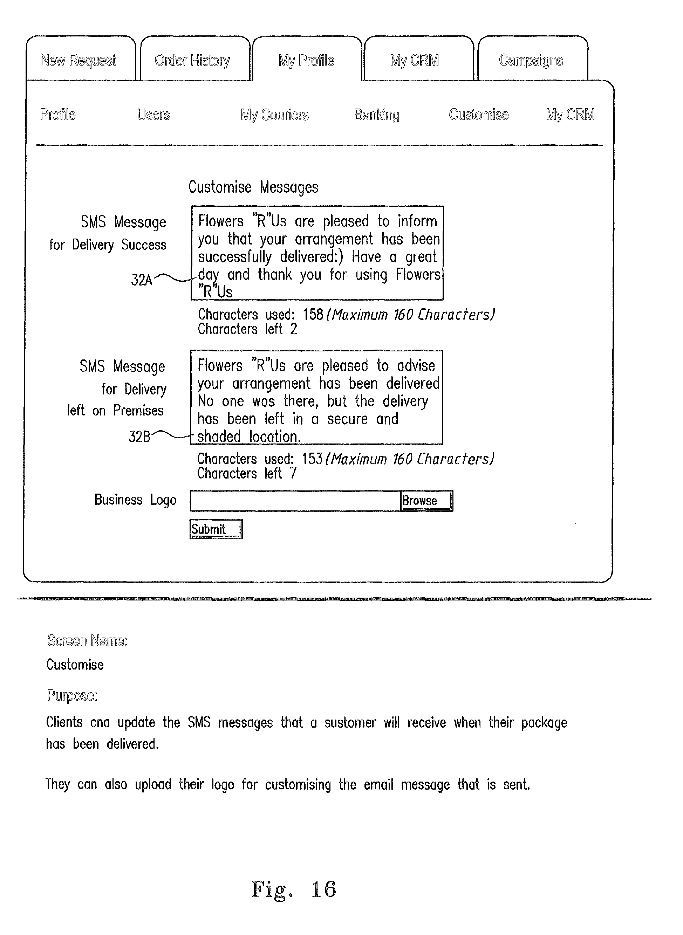

Figure 16 is a data sequence customise screen suitable for use with the system of figure 1.

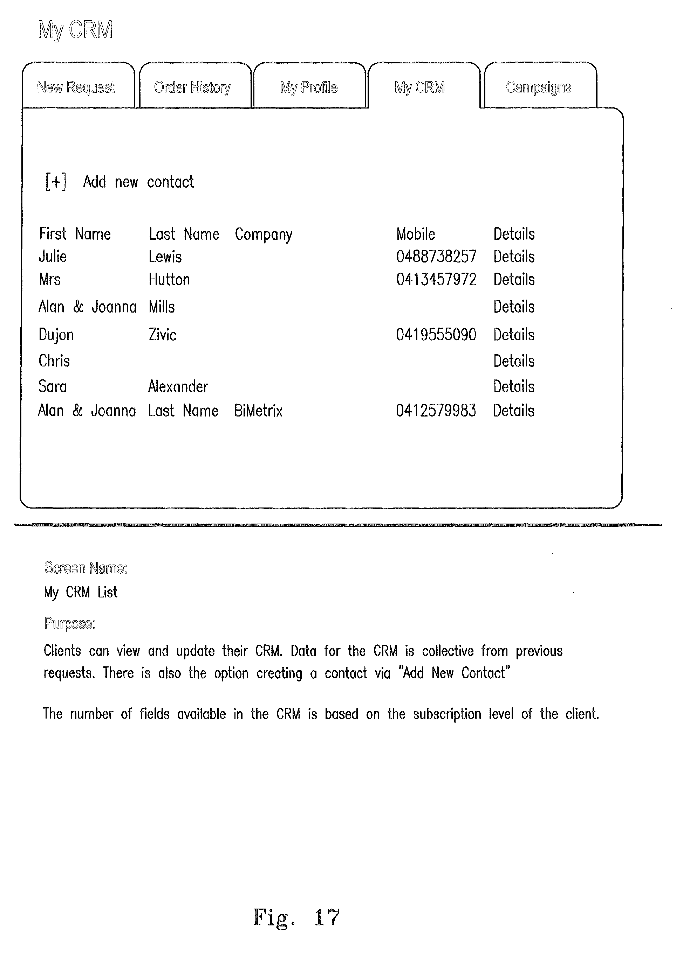

Figure 17 is a screen shot of a client relationship management contact screen suitable for use with the system of figure 1.

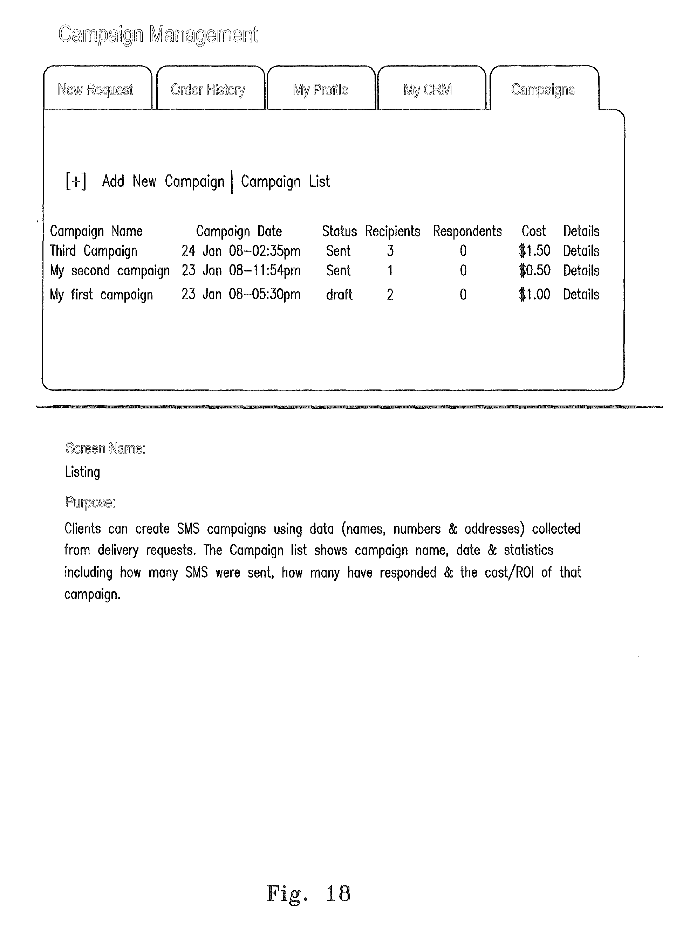

Figure 18 is a screen shot of a campaign listing screen suitable for use with the system of figure 1.

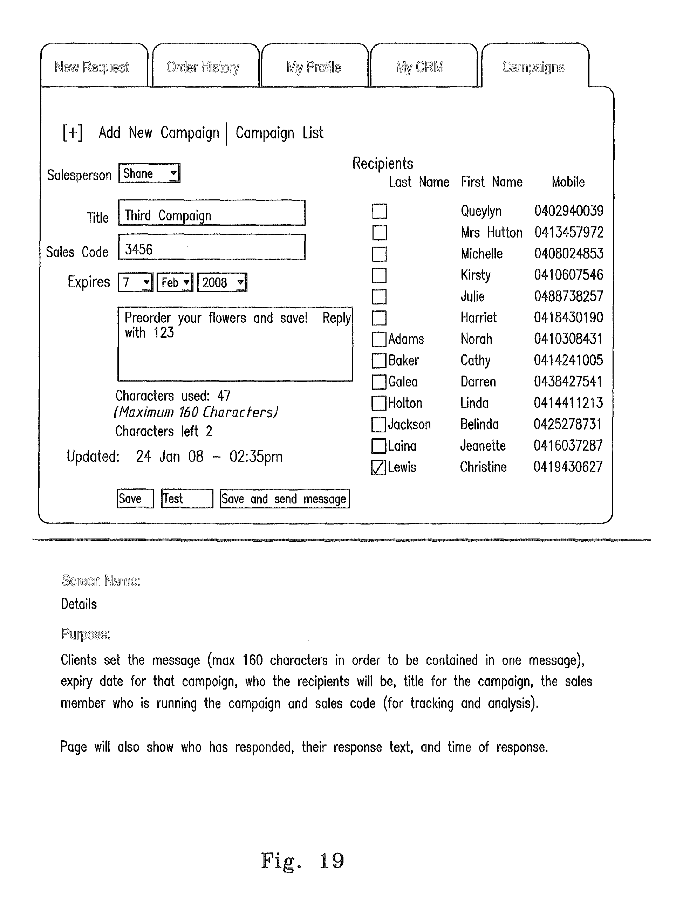

Figure 19 is a screen shot of a campaign data sequence screen suitable for use with the system of figure 1.

Figure 20 is a screen shot of an SMS data sequence indicating successful delivery displayed on a customer mobile phone suitable for use with the system of figure 1.

Fig 20, as previously described, illustrates a mobile phone screen 141 which can display the mapped **data sequence** 132.

Fig 121 provides a further example of a "success" mapped data sequence text 132.

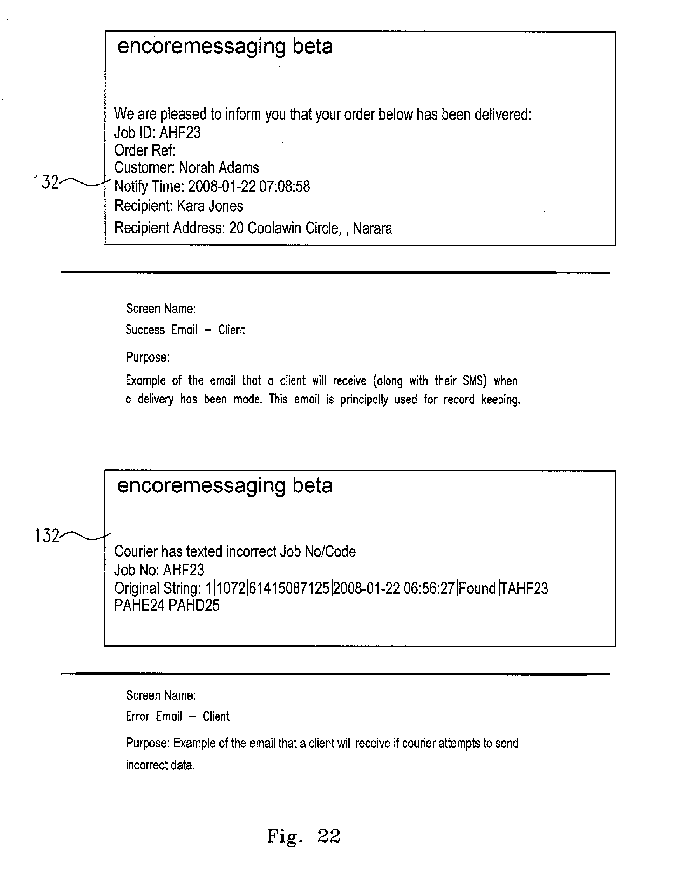

Yet a further example of a mapped **data sequence** 132 corresponding to indication of a successful transaction fulfilment event is shown in fig 22, upper screen. Fig 22 lower screen illustrates a mapped data sequence 132 wherein an error condition is communicated.

Particularly the output of the screen showing in fig 12 and fig 13 indicates the sophistication of data that may be derived by database 121 both as part of the initial delivery event as part of what may be derived as a result of the data collected from a series of delivery events.

### Second embodiment

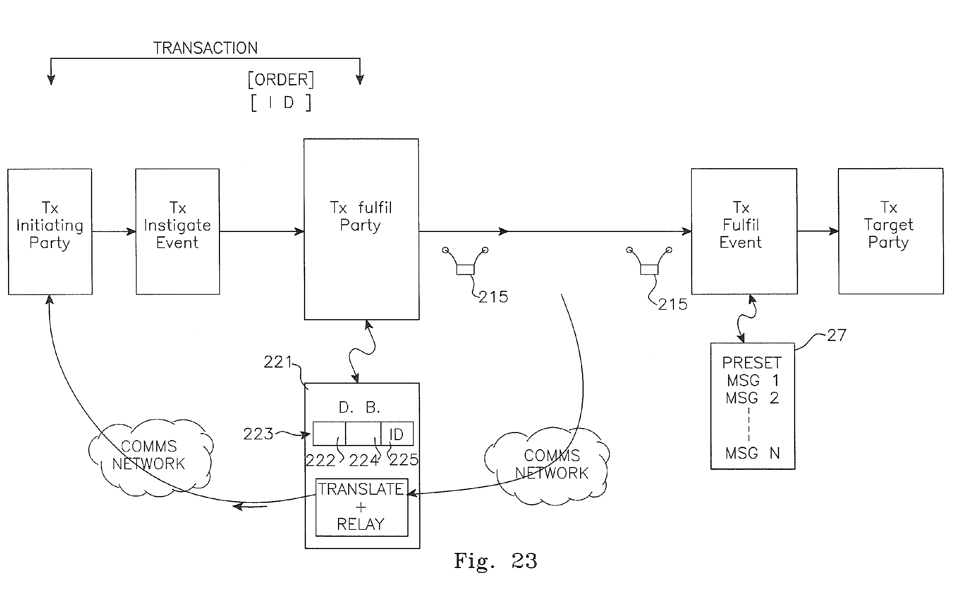

With reference to fig 23 there is illustrated the system of fig 1 applied to a simpler situation of a dry cleaner wherein, in its simplest form, a "ready for pick up" data sequence is provided as a mapped data sequence. In this instance there is no need for any transaction intermediary. The transaction fulfilment party 213 is able to achieve the transaction fulfilment event 220 without assistance of any transaction intermediaries. In this instance the transaction target party 214 is, in effect, the same as the transaction initiating party 212 in that they are one and the same party linked by delivery of successfully dry cleaned goods.

### Third embodiment

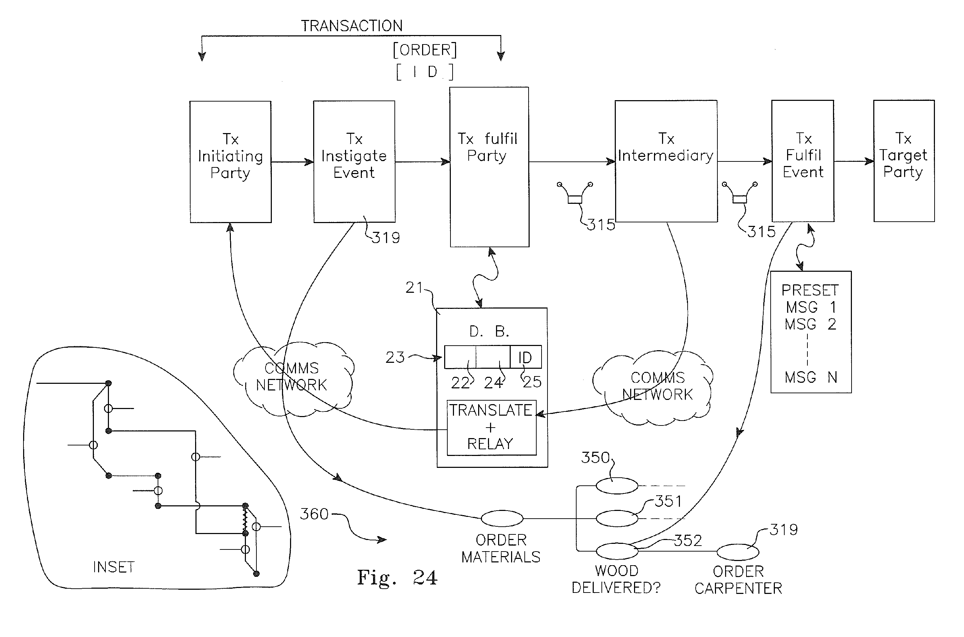

Fig 24 illustrates the potential sophistication of the system of fig 1 wherein there are a multitude of transaction instigate events 319 which are mapped to a "Gantt" chart in this instance residing within database 321. In the particular example of fig 24 the initial transaction instigation event 319 may be the ordering of materials for a particular building job. There may, for example, be three different materials ordered resulting in strands 350,351,352. Strand 352 may, for example, relate to a supply of raw materials such as wood being delivered to a specific building site. Once those raw materials are delivered and the appropriate preset data sequence 327 is communicated back to database 321 then a fresh transaction instigate event 319 is generated whereby a carpenter is then ordered to the building site to work with the wood delivered as part of strand 352 within gantt chart 360. Once the carpenter has its data sequence of completion indicated this will result in a fresh transaction instigate event 319 as dictated by the gantt chart 360 and so on. In effect what is provided is an automated, multi strand and multi delivery system working in conjunction with an automated transaction instigation event system which can be programmed and orchestrated within database 321.

The power of the system is further exemplified in the inset of Fig 24 which illustrates multiple cascading instances of (or calls to) the system of Fig 24 consequent to multiple series and parallel triggering events.

### Hardware implementation

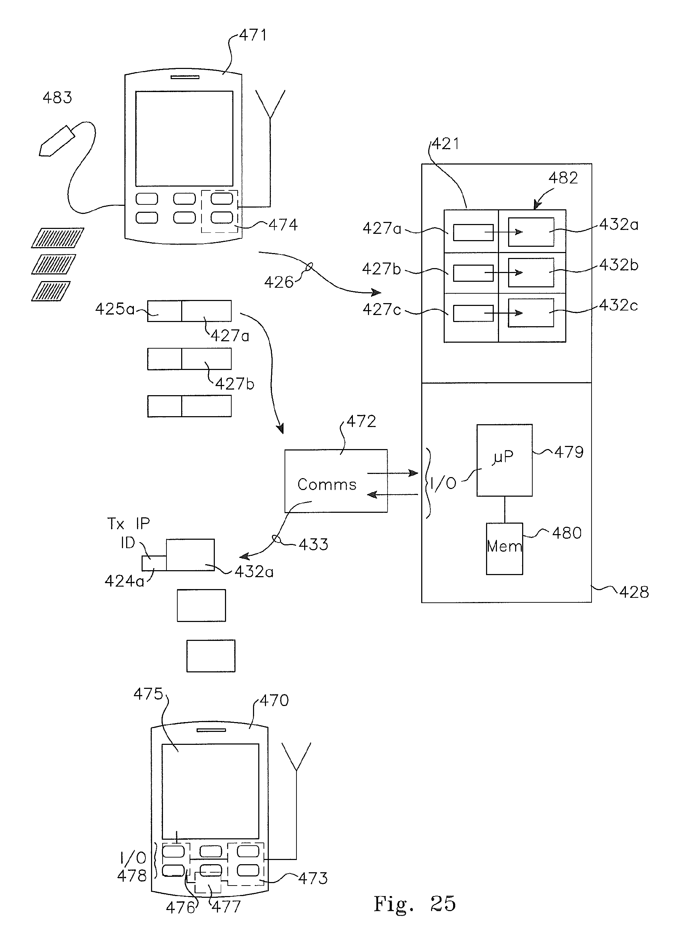

With reference to figure 25 there is illustrated a specific hardware implementation of the system of figure 1. Like components are numbered as for the system of figure 1 except in the 400 series. So, for example, translate and relay mechanism 28 of figure 1 is translate relay mechanism 428 in figure 25.

The primary components in this hardware system comprise the translate and relay mechanism 428, a first mobile telephone device 470 and a second mobile telephone device 471. Each device includes respective communications modules 472, 473, 474, adapted to communicate over a medium with each other. In the first example the medium comprises the mobile telephone system and with all modules equipped to send and receive SMS (short messaging system)- type alphanumeric text data sequences. The particular medium is merely by one of example. It is envisaged that many other communication mediums may be utilised in order to effect appropriate messaging as between the translation relay mechanism 428, first mobile telephone device 470 and second telephone device 471. Similarly the mobile telephone devices themselves may be in the form of a PDA (Personal Digital Assistant) or other computer processor - equipped device.

First mobile telephone device 470 includes a display 475 in communication with a microprocessor 476 which, in turn, is in communication with a communication module 473 and also with memory 477 and I/O device 478. In this instance the I/O device 478 can include a keyboard and a touch screen data entry via display 475. In this instance the second mobile telephone device 471 is constructive in the same matter and like components are numbered as for the first mobile telephone device 470. Digital data sequences are transmitted through the system in the following manner:

Translate relay mechanism 428 also includes a processor 479, memory 480 and I/O 481, which is in part in communication with communications device 472 thereby to permit messaging between communication devices 470, 471, and 472 as briefly described above.

Memory 480 can store part of database 421. Database 421 includes data sequence map data 482 which provides a map of preset data sequences 427a, 427b and 427c to corresponding mapped data sequences 432a, 432b and 432c respectively. In use a messaging sequence between devices 470, 428 and 470 occurs as follows:

A data sequence from the second mobile telephone device 471 will be in the form of a preset data sequence 427a, 427b, 427c, and has associated with it unique transaction identifier 425 which, in this instance, comprises a specific telephone number which is dialled by a second mobile telephone device 471.

The incoming data sequence into communications device 472 of translate and relay mechanism 428 is associated with the unique transaction identifier 425 of the transaction 411 to which the communication pertains. Processor 479 then maps the communication by looking up the data sequence map data 482 and causes communication device 472 to transmit corresponding mapped data sequence 432a to first mobile telephone device 470 wherein the data sequence is displayed on display 475. In a preferred form the data sequence which is transmitted over channel 433 includes identity data 424 corresponding to the transaction instigating party 412 (not shown) with whom the first mobile telephone device 470 is associated. In its simplest form the identity data 424 comprises the mobile telephone number of device 470.

This mapped sequence of data sequences allows a relatively simple data sequence sent from second mobile telephone device 471 to lead to a fuller or more complex **data** sequence being communicated to the first mobile telephone device 470 whilst also maintaining a specific relation with a specific transaction 411 as originally instigated by transaction initiating party 412.

In particular forms the translate and relay mechanism 28 may either 'push' or 'pull' data sequences as between its self and the transaction intermediary 16 over the communications network 26.

Similarly mapped data sequences 32 as between translate and relay mechanism 28 and the transaction instigated party 12 may be 'pushed' from the translate and relay mechanism to a receiving device of the transaction initiating party 12 over channel 33.

### Barcode embodiment

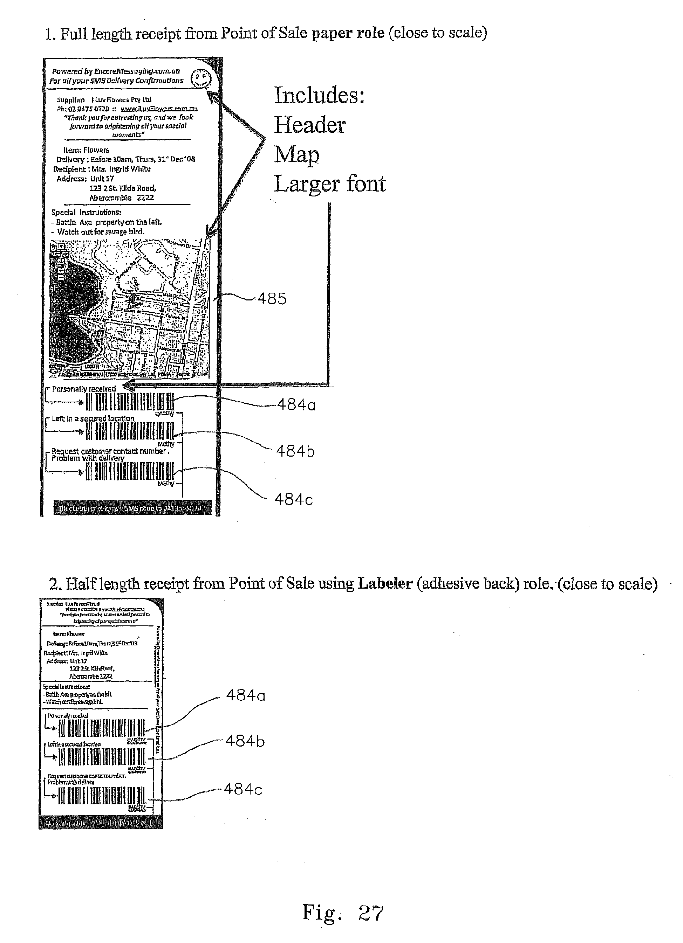

With further reference to Fig. 25, second mobile telephone device 471 can be fitted with an information or data reader device, in this instance in the form of a barcode wand 483 adapted to read machine readable information or data which is associated with the goods/services being delivered. In this instance the machine readable information or data takes the form of barcodes 484a,b,c or equivalent which can be provided as part of a delivery slip 485 (refer Figure 27) or, in the alternative, may be provided on some other form of data carrier. Non limiting alternative forms include 3D bar codes and RFID tags.

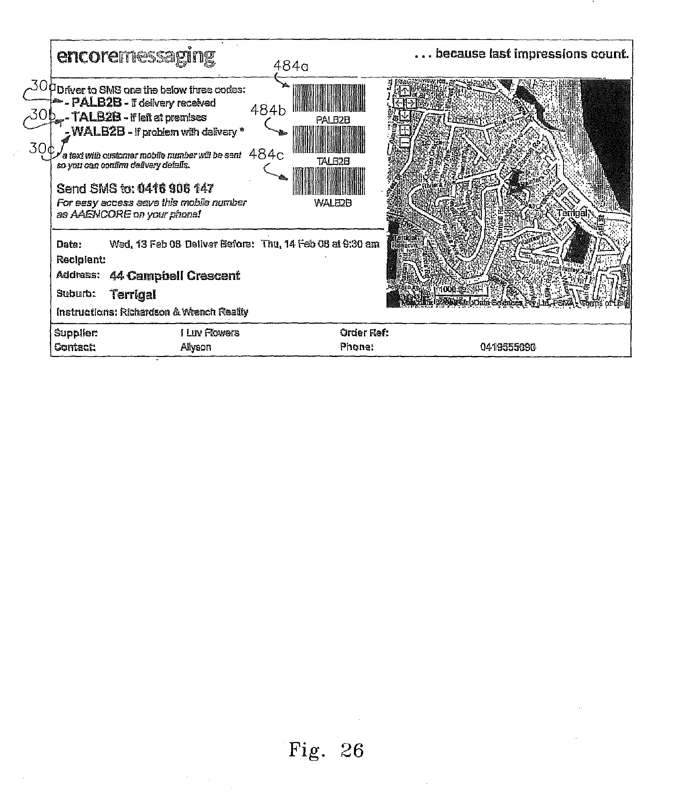

As illustrated in Fig. 26, each barcode 484a,b,c corresponds to a particular preset data sequence 30a, 30b, 30c. In use, in this alternative embodiment, a courier or other transaction intermediary can utilise the barcode wand 483 to input the appropriate preset data sequence into mobile telephone device 471. Telephone device 471 then automatically instigates communication with translate and relate mechanism 428 and transmits the corresponding preset data sequence in a preferred form without further input from the transaction intermediary. The preset data sequence, on receipt at the translate and relay mechanism 428 is then mapped and on-relayed to mobile telephone device 470 associated with transaction instigating party 12. In a preferred form, the corresponding mapped **data** sequence 432 is "pushed" to mobile telephone device 470. By "pushed" is meant that the relevant data sequence data comprising the corresponding mapped data sequence 432a,b,c is loaded and sent for automatic reception by telephone device 470. That is, telephone device 470 does not need to initiate a send request upon communications module 472 associated with translate and relay mechanism 428 - the transmission is caused to occur by a trigger event, at communications module 472 without anything further being needed for the data sequence to be received on telephone device 470.

In preferred forms, either corresponding push or in the alternative, pull technology may be utilised in the messaging sequence passing between translate and relay mechanism 428 and mobile telephone device 471.

### Associated services

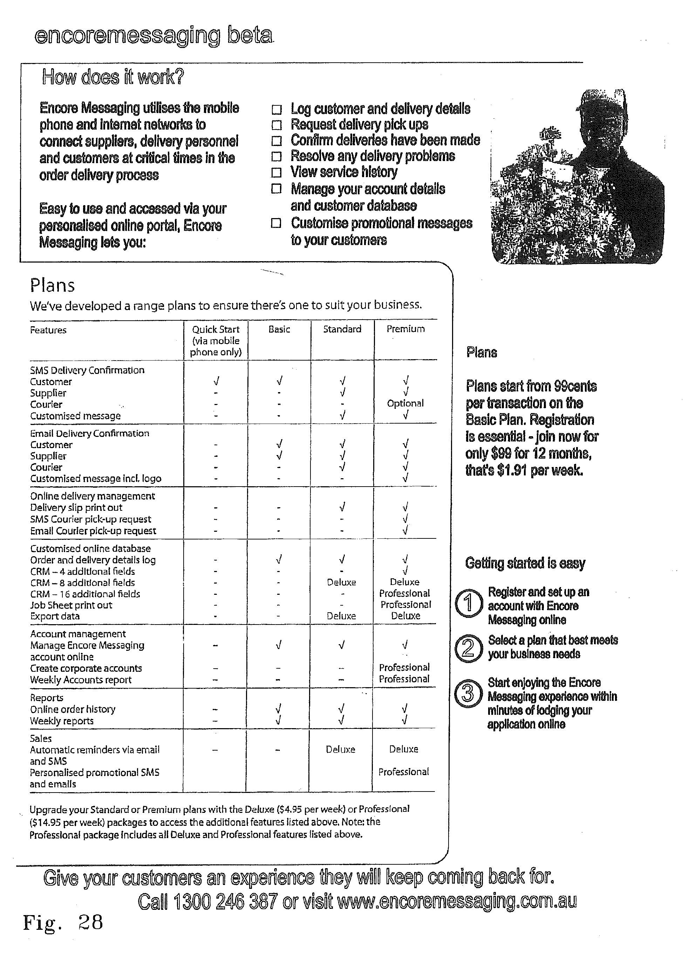

Fig. 28 illustrates in tabular form associated services which can be offered deriving from information in database 21.

The above describes only some embodiments of the present invention and modifications, obvious to those skilled in the art, can be made thereto without departing from the scope of the present invention.

## Claims

1. An acknowledgement delivery system associated with at least one transaction between a transaction initiating party and a transaction fulfilling party; said transaction given effect by said transaction fulfilling party; said transaction initiated by a transaction instigation event; said transaction being completed by a transaction fulfilment event; each transaction defined by a unique transaction identifier; said system transmitting events associated with said transaction fulfilment event to said transaction initiating party by way of preset data sequences defined with reference to said unique transaction identifier; and wherein said preset data sequence is transmitted to a translate and relay mechanism when initiated and wherein said preset data sequence is mapped to a corresponding first mapped data sequence by said translate and relay mechanism and then transmitted to said transaction initiating party.

2. The delivery system of claim 1 wherein said preset data sequence is transmitted automatically.

3. The delivery system of any previous claim wherein said preset data sequences are selected from a list of two or more graded data sequences.

4. The delivery system of any previous claim wherein said preset data sequence is transmitted as part of said transaction fulfilment event.

5. The delivery system of claim 1 wherein said transaction fulfilling party engages a transaction intermediary to give effect to said transaction.

6. The delivery system of claim 1 or claim 2 wherein said transaction comprises at least a first transaction component and a second transaction component.

7. The delivery system of claim 6 wherein said transaction fulfilling party gives effect to said first transaction component.

8. The delivery system of claim 6 or claim 7 wherein said transaction intermediary gives effect to said second transaction component.

9. The delivery system of any previous claim wherein said preset data sequence further includes a unique transaction identifier or an analog thereof.

10. The delivery system of any previous claim wherein said corresponding mapped data sequence further includes said unique transaction identifier or an analog thereof.

11. The delivery system of claims 1 to 10 and further including a mobile communications device and an information or data reader; said mobile communications device on receipt of an information or data signal from said reader initiating a data transmission to a remote location; said data transmission including data corresponding to information or data read by said reader.

12. A method of acknowledging transaction fulfilment events to a transaction initiating party associated with at least one transaction between said transaction initiating party and a transaction fulfilling party; said transaction given effect by said transaction fulfilling party; said method comprising the steps of: said transaction initiated by a transaction instigation event; said transaction being completed by a transaction fulfilment event; each transaction defined by a unique transaction identifier; transmitting events associated with said transaction fulfilment event to said transaction initiating party by way of preset data sequences defined with reference to said unique transaction identifier and wherein said preset data sequence is transmitted to a translate and relay mechanism when initiated and wherein said preset data sequence is mapped to a corresponding first mapped data sequence by said translate and relay mechanism and then transmitted to said transaction initiating party.

13. A translate and relay mechanism wherein a preset data sequence transmitted over a communication network 26 is mapped to a corresponding first mapped data sequence by said translate and relay mechanism and then transmitted over communications network 33 to a transaction initiating party; said translate and relay mechanism acknowledging transaction fulfilment events to a transaction initiating party associated with at least one transaction between said transaction initiating party and a transaction fulfilling party; said transaction given effect by said transaction fulfilling party; said transaction initiated by a transaction instigation event; said transaction being completed by a transaction fulfilment event; each transaction defined by a unique transaction identifier; events associated with said transaction fulfilment event transmitted to said transaction initiating party by way of a preset data sequence defined with reference to said unique transaction identifier.

14. The translate and relay mechanism of claim 13 wherein said preset data sequence is selected from a list of two or more graded data sequences.

15. The translate and relay mechanism of claim 13 or 14 wherein at the time of fulfilment (delivery) the transaction fulfilment event 20 includes the imaging of goods 15 together with imaging of the transaction target party 14 as a form of verification taken by an imaging device 52 thereby producing an image 51 forming supplementary data 50 which is transmitted over communication network 26 to said translate and relay mechanism 28 for on transmission to the transaction fulfilment party 13 and/or the transaction initiating party 12 over communications network 33.
